# EUROPÄISCHE PATENTSCHRIFT

(11) **EP 3 216 420 B1**
(45) Veröffentlichungstag und Bekanntmachung des Hinweises auf die Patenterteilung: **05.12.2018**
(21) Anmeldenummer: 17165754.7
(22) Anmeldetag: 12.04.2016
(51) Int. Cl.: A61C 13/00, A61C 13/12

(54) **ROHLING ZUR HERSTELLUNG EINES DENTALELEMENTS**
BLANK FOR PRODUCING A DENTAL ELEMENT
ÉBAUCHE DESTINÉE À FABRIQUER UNE PROTHÈSE DENTAIRE

(30) Priorität: 30.04.2015 AT 503522015
(43) Veröffentlichungstag der Anmeldung: 13.09.2017
(62) Teilanmeldung aus: 16164903.3
(73) Patentinhaber: STEGER, Heinrich, 39031 Bruneck (IT)
(72) Erfinder: STEGER, Heinrich, 39031 Bruneck (IT)
(74) Vertreter: Torggler & Hofinger Patentanwälte

(56) Entgegenhaltungen:
- EP-A1- 0 480 209
- DE-A1-102011 055 393
- US-A1- 2009 130 634

## Beschreibung

Die Erfindung betrifft eine Anordnung mit zwei Rohlingen und einer Haltevorrichtung zum Festhalten der beiden Rohlinge, wobei die beiden Rohlinge jeweils eine als Vorderseite ausgebildete erste Seite und eine als Rückseite ausgebildete zweite Seite aufweisen.

Ein derartiges Festhalten bzw. Einspannen von zwei Rohlingen in einem Werktischeinsatz (Haltevorrichtung) geht aus der DE 10 2010 061 116 A1 (entspricht der EP 2 462 894 A2) und dabei im Speziellen aus der Abbildung 9.1d hervor. Die beiden eingespannten Rohlinge liegen über eine Kontaktfläche aneinander an. Nachteilig ist, dass diese Rohlinge über einen Großteil der Vorder- bzw. Rückseiten im Werktischeinsatz eingespannt sind. Somit ist nur ein geringer überstehender Bereich überhaupt bearbeitbar.

Zudem betrifft die Erfindung eine Anordnung, bei der in eingespanntem Zustand die beiden Rohlinge mit den Rückseiten einander zugewandt sind und im Wesentlichen die kompletten Vorderseiten der Rohlinge zugänglich sind. Beispiele dafür sind in der US 2009/0130634 A1 und in der EP 0 480 209 A1 gezeigt.

Die Aufgabe der vorliegenden Erfindung besteht daher darin, eine Anordnung zu schaffen, die eine einfache und effektive Bearbeitung von zwei eingespannten Rohlingen ermöglicht.

Dies wird durch eine Anordnung mit den Merkmalen von Anspruch 1 gelöst.

Dadurch ist es nicht mehr notwendig, die Rohlinge umzuspannen oder anders einzusetzen, um aus möglichst dem gesamten Rohling die gewünschten Dentalelemente herauszuarbeiten. "lm Wesentlichen die kompletten Vorderseiten" bedeutet dabei, dass (in einer Draufsicht gesehen) zumindest 80 %, vorzugsweise zumindest 90%, besonders bevorzugt zumindest 95%, der Vorderseiten in eingespanntem Zustand für eine Bearbeitungsvorrichtung frei zugänglich sind.

Bei einer derartigen Anordnung kann das Festhalten der beiden Rohlinge an sich auf beliebige Art und Weise erfolgen, solange eben die beiden Vorderseiten möglichst komplett zugänglich sind. Bevorzugt ist aber vorgesehen, dass beide Rohlinge zumindest eine, von der Rückseite beabstandete Hilfshaltefläche zum Festhalten des Rohlings an einer Haltevorrichtung aufweist, wobei der Rohling zwischen der zumindest einen Hilfshaltefläche und der Rückseite eine Sonder-Haltedicke aufweist und wobei die Standard-Haltedicke doppelt so groß wie die Sonder-Haltedicken ist.

Für ein einfaches Festspannen der beiden Rohlinge ist bevorzugt vorgesehen, dass die Haltevorrichtung zumindest eine, vorzugsweise drei, Spannvorrichtung aufweist, wobei die Rohlinge über ihre Hilfshalteflächen von de Spannvorrichtung an der Haltevorrichtung festspannbar sind. Bei einem konkreten Ausführungsbeispiel ist dazu weiters vorgesehen, dass - bei mehreren Spannvorrichtungen - jede Spannvorrichtung ein bewegbares Spannteil und eine Spannfläche aufweist, wobei in eingespanntem Zustand eine Hilfshaltefläche des einen Rohlings an der Spannfläche aufliegt und eine Hilfshaltefläche des anderen Rohlings am Spannteil anliegt. Natürlich kann über dieselbe Spannvorrichtung auch ein einzelner Rohling über die Haupthaltefläche und die Rückseite eingespannt werden.

Prinzipiell ist es möglich, dass die Spannvorrichtung geeignet ist, um unterschiedlich dicke Rohlinge einzuspannen. So kann die Spannvorrichtung zueinander variabel einstellbare Spannteile und Spannflächen aufweisen. Bevorzugt ist für eine einfache Bauweise allerdings vorgesehen, dass das bewegbare Spannteil und die Spannfläche der Spannvorrichtung zueinander einen im Wesentlichen unveränderlichen, vorzugsweise der Standard-Haltedicke entsprechenden, Abstand aufweisen. Somit können in ein und dieselbe, einfach gebaute Spannvorrichtung sowohl ein Rohling als auch zwei Rohling eingespannt werden.

Für eine einfache Herstellung, Lagerhaltung und Verwendung ist bevorzugt vorgesehen, dass die beiden Rohlinge identisch ausgebildet sind.

Grundsätzlich müssen sich die Rohlinge in eingespanntem Zustand über ihre Rückseiten nicht berühren. Für ein einfaches Festhalten ohne irgendein Zwischenstück ist aber bevorzugt vorgesehen, dass die Rohlinge in eingespanntem Zustand über die einander zugewandten Rückseiten teilweise oder vollständig aneinander anliegen.

Gemäß einem weiteren bevorzugten Ausführungsbeispiel weist eine solche Anordnung auch eine Bearbeitungsvorrichtung zum Bearbeiten der beiden in der Haltevorrichtung eingespannten Rohlinge auf, wobei von der Bearbeitungsvorrichtung über die im Wesentlichen komplett zugänglichen Vorderseiten beide Rohlinge bearbeitbar sind. Mithin sind die Bearbeitungsvorrichtung und die Haltevorrichtung so zueinander relativ bewegbar, dass beide Vorderseiten bearbeitbar sind.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1a und 1: b eine Haltevorrichtung samt Rohling nach dem Stand der Technik mit einer Spannvorrichtung in passiver Stellung,
- Fig. 2a bis 2c: eine Haltevorrichtung samt Rohling nach dem Stand der Technik mit einer Spannvorrichtung in einer Spannstellung,
- Fig. 3a bis 3g: unterschiedliche Ansichten eines erfindungsgemäßen Rohlings,
- Fig. 4a und 4b: zwei in eine Haltevorrichtung eingesetzte Rohlinge,
- Fig. 5a bis 5c: die beiden eingespannten Rohlinge bei Spannstellung der Spannvorrichtung,
- Fig. 6a bis 6g: unterschiedliche Ansichten eines bereits vorgefrästen Rohlings,
- Fig. 7a und 7b: unterschiedliche Ansichten einer Anordnung mitsamt Haltevorrichtung und Bearbeitungsvorrichtung,
- Fig. 8a und 8b: Rohlinge in unterschiedlichen Ansichten, wobei aus einem Rohling bereits ein dentales Ersatzteil herausgearbeitet wurde,
- Fig. 9a bis 12c: alternative Ausführungsformen von zwei teilweise aneinander anliegenden Rohlingen und
- Fig. 13a bis 16c: ein alternatives Ausführungsbeispiel einer Haltevorrichtung mit einem bzw. zwei eingespannten Rohlingen.

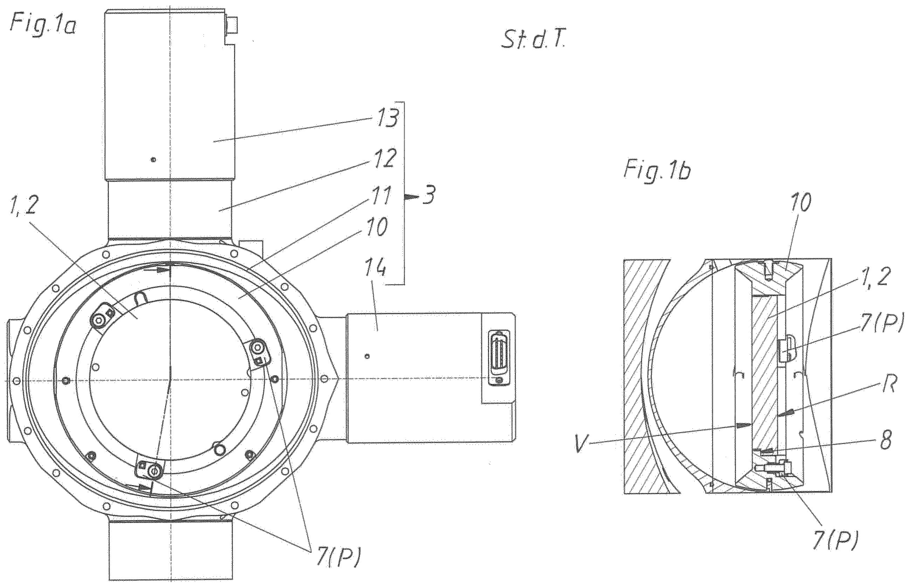

Fig. 1a zeigt eine Haltevorrichtung 3 für einen Rohling 1, 2, wie er bereits seit einiger Zeit von der Anmelderin hergestellt, angeboten und verkauft wird. Eine derartige Haltevorrichtung weist einen im Wesentlichen C-förmigen Träger 12 auf, an welchem die Antriebsmotoren 13 und 14 angeordnet sind. Am Träger 12 ist der äußere Haltering 11 drehbar gelagert. An diesem äußeren Haltering 11 wiederum ist der innere Haltering 10 drehbar gelagert. Im inneren Haltering 10 ist über die Spannvorrichtung 6 und deren Spannteile 7 der Rohling 1, 2 einspannbar, wobei sich die Spannteile 7 in Fig. 1a in einer passiven Stellung P befinden. In Fig. 1a wird mit den eingezeichneten Pfeilen auf eine Schnittachse hingewiesen, wobei der dazugehörige Schnitt in Fig. 1b dargestellt ist. Erkennbar ist dabei, dass der Rohling 1, 2 in den inneren Haltering 10 eingesetzt ist und auf einer Spannfläche 8 aufliegt. Der Rohling 1, 2 weist dabei eine erste Seite (entspricht einer Vorderseite V) und eine zweite Seite (entspricht einer Rückseite R) auf.

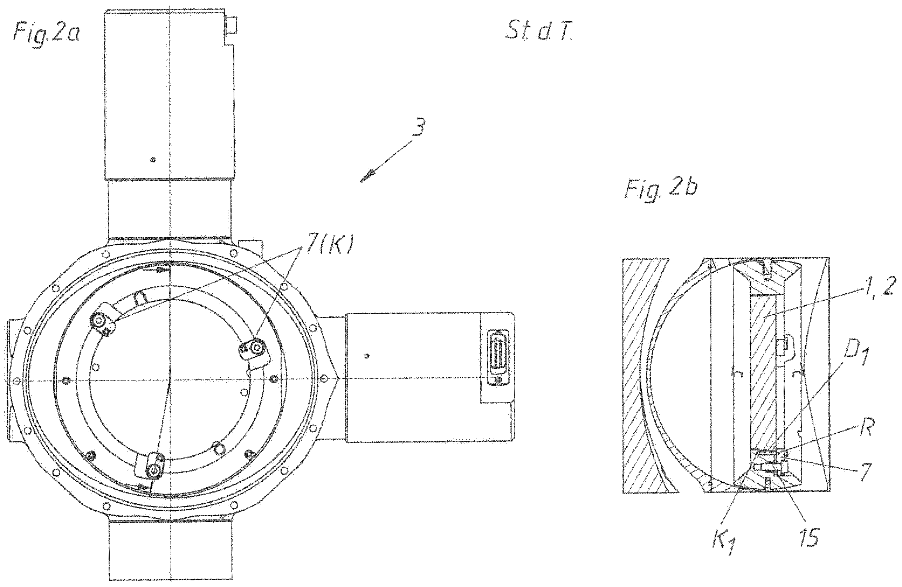

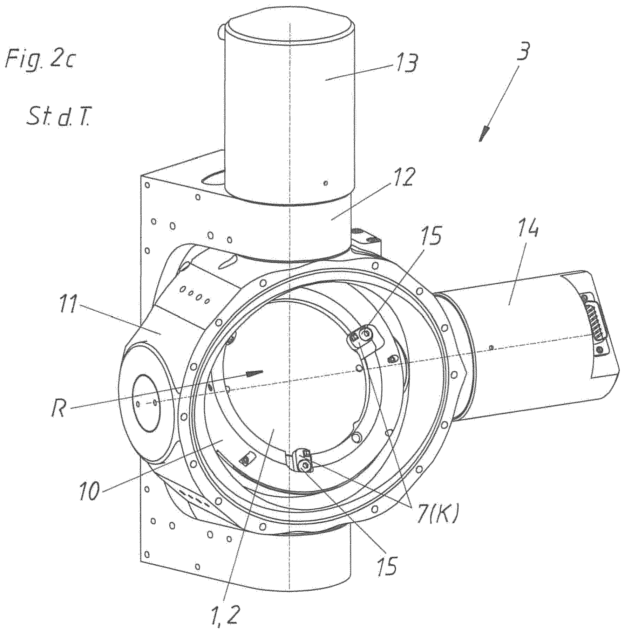

Um den Rohling 1, 2 nun an der Haltevorrichtung 3 festzuhalten, werden gemäß den Fig. 2a und 2b die Spannteile 7 um die Spannbolzen 15 der Spannvorrichtung 6 gedreht, wodurch die Spannteile 7 in eine Spannstellung K gelangen. In dieser Spannstellung K ist der Rohling 1, 2 über die am Rohling 1, 2 ausgebildeten Haupthalteflächen K₁ und die Rückseite (R) zwischen den Spannflächen 8 und den Spannteilen 7 der Spannvorrichtung 6 eingeklemmt. Der Rohling 1, 2 weist zwischen seiner Rückseite (R) und jeder Haupthaltefläche K₁ eine Standard-Haltedicke D₁ auf. Bei einer bevorzugten Ausführungsvariante beträgt diese Standard-Haltedicke D₁ 10 mm. In Fig. 2c ist die Haltevorrichtung 3 samt eingespanntem Rohling 1, 2 in einer 3D-Ansicht dargestellt. Es sind auch die Drehachsen für die beiden Halteringe 10 und 11 erkennbar.

Ähnliche Rohlinge sind auch aus der WO 2013/072287 A1, der WO 2013/122662 A1, der WO 2010/094922 A1 und der DE 203 16 004 U1 bekannt.

Diese aus dem Stand der Technik bekannten Rohlinge sind in Haltevorrichtungen auf bewährte Art und Weise zeitlich nacheinander bearbeitbar, wodurch dentale Ersatzteile hergestellt werden.

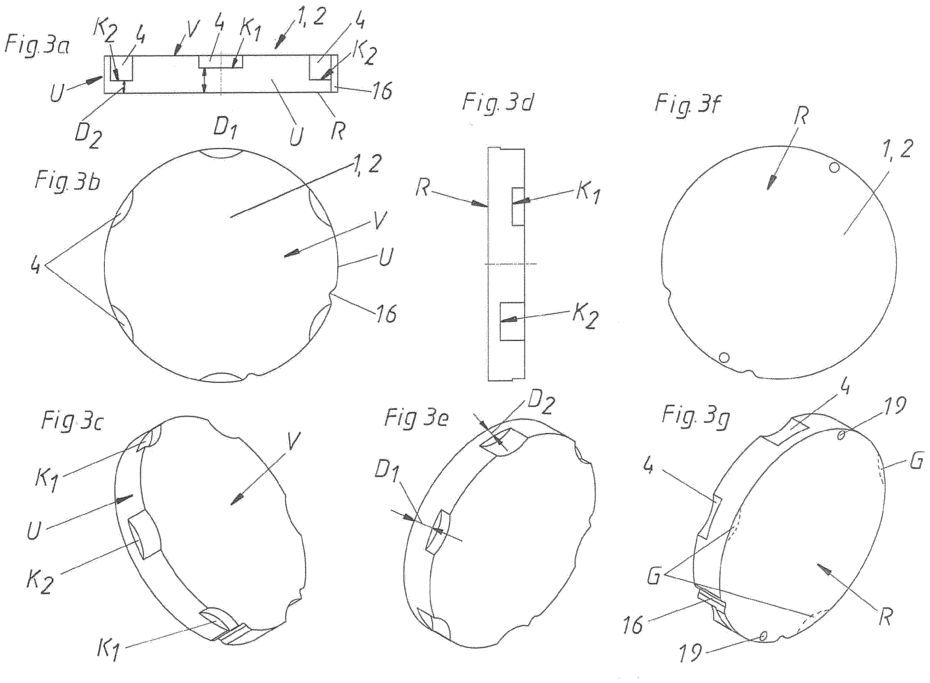

In Fig. 3a ist in einer Seitenansicht die im Wesentlichen kreiszylindermantelförmige Umfangsfläche U eines Rohlings 1, 2 dargestellt. In dieser kreiszylindermantelförmigen Umfangsfläche U sind mehrere Ausnehmungen 4 vorhanden. Durch diese Ausnehmungen 4 sind zur Vorderseite V und zur Rückseite R parallele Haupthalteflächen K₁ und Hilfshalteflächen K₂ am Rohling 1, 2 ausgebildet. Zudem bildet gleichzeitig auch ein Teil der zweiten Seite (entspricht der Rückseite R) Gegenhalteflächen G (siehe Fig. 3g). Die Haupthalteflächen K₁ im Bereich der Ausnehmungen 4 und die Rückseite R sind jeweils um die Standard-Haltedicke D₁ voneinander beabstandet. Im Bereich der Hilfshalteflächen K₂ weist der Rohling 1, 2 die Sonder-Haltedicke D₂ als Abstand zur Rückseite R auf. Die Sonder-Haltedicke D₂ ist kleiner, vorzugsweise halb so groß, wie die Standard-Haltedicke D₁. Auch aus den Fig. 3b bis 3g sind nochmals dieselben Komponenten bzw. Flächen erkennbar. In den Fig. 3a bis 3g ist auch die zumindest eine Positioniernut 16 ersichtlich, über welche die Rohlinge 1, 2 an passender Stelle in der Haltevorrichtung 3 eingespannt werden. Dadurch wird auch garantiert, dass beim Festspannen von zwei Rohlingen 1, 2 die Hilfshalteflächen K₂ der beiden Rohlinge 1, 2 richtig - das heißt axial gegenüberliegend - zueinander positioniert sind. Es ist aber alternativ auch möglich eine Positionierung über die in der Rückseite R ausgebildeten Positionsbohrungen 19 zu realisieren.

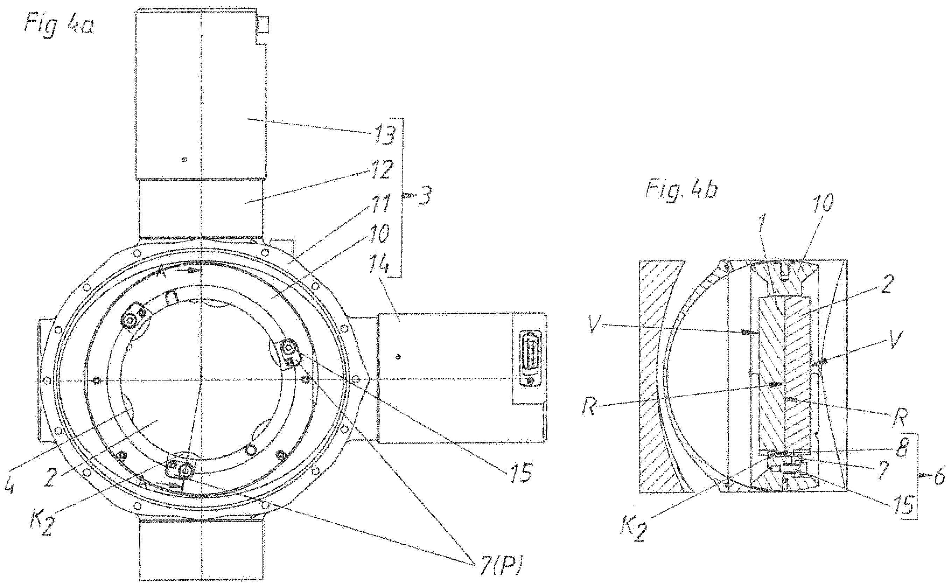

Fig. 4a zeigt eine Haltevorrichtung 3, welche einen inneren Haltering 10, einen äußeren Haltering 11, einen vorzugsweise C-förmigen Träger 12 und zwei Antriebsmotoren 13 und 14 für die beiden Halteringe 10 und 11 aufweist. Im inneren Haltering 10 sind - wie in Fig. 4b ersichtlich - die beiden Rohlinge 1 und 2 eingesetzt. Der erste Rohling 1 liegt dabei über seine Hilfshalteflächen K₂ an den Spannflächen 8 der Spannvorrichtung 6 an. Die Spannvorrichtung 6 wird durch die Spannflächen 8, die Spannteile 7 sowie die Spannbolzen 15 gebildet. In den Fig. 4a und 4b befinden sich die Spannteile 7 noch in der passiven Stellung P.

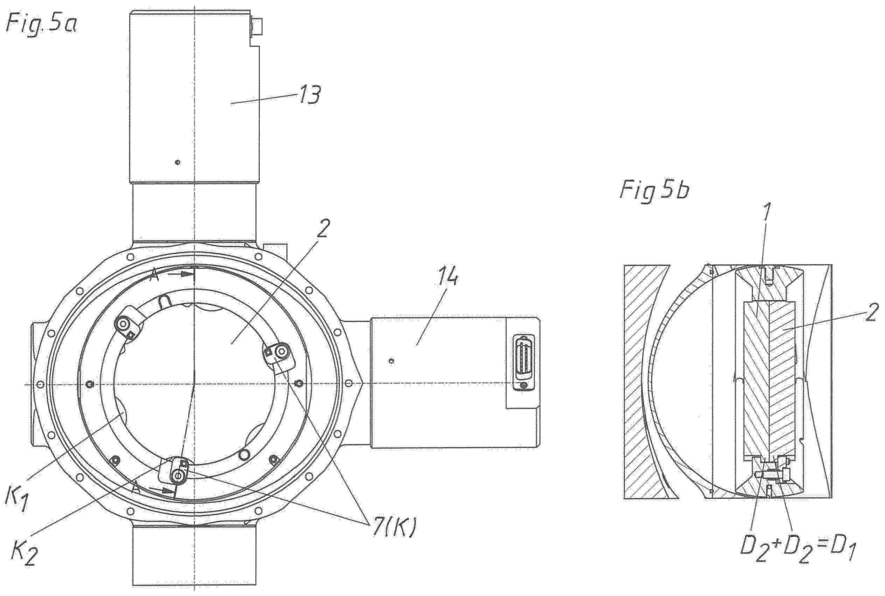

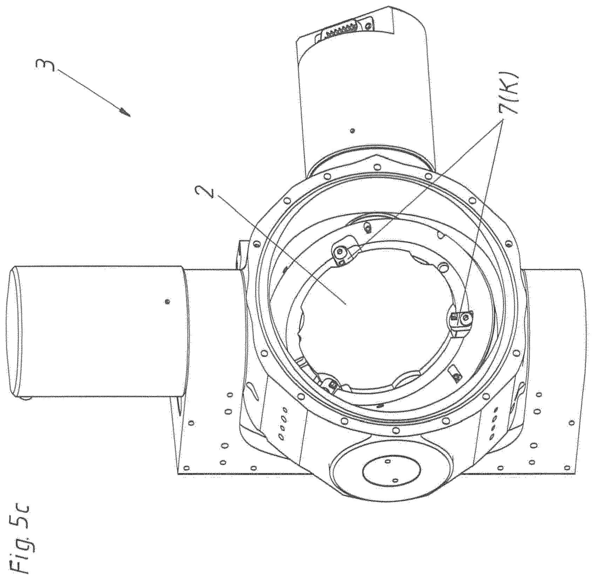

Demgegenüber wurden gemäß den Fig. 5a bis 5c die Spannteile 7 um die Spannbolzen 15 in die Spannstellung K verschwenkt. Dadurch liegen die Spannteile 7 an den Hilfshalteflächen K₂ des zweiten Rohlings 2 auf. Da der erste Rohling 1 gemäß den Fig. 4b und 5b bereits an der Spannfläche 8 des inneren Halterings 10 anliegt, werden beide Rohlinge 1 und 2 gleichzeitig durch die Spannvorrichtung 6 an der Haltevorrichtung 3 festgespannt. Da die Sonder-Haltedicken D₂ der beiden Rohlinge 1 und 2 addiert die Standard-Haltedicke D₁ ergeben, können - auf gleiche Art und Weise wie ein einzelner Rohling 1, 2 über die Haupthalteflächen K₁ und die Rückseite R eingespannt wird - beide Rohlinge 1 und 2 über die jeweiligen Hilfshalteflächen K₂ eingespannt werden. Somit kann ohne eine Änderung an der Haltevorrichtung 3 vornehmen zu müssen, eine effizientere Verwendung erfolgen, indem zwei Rohlinge 1 und 2 gleichzeitig eingespannt werden. Zwischen der Bearbeitung der beiden Rohlinge 1 und 2 muss dadurch kein Umspannen erfolgen.

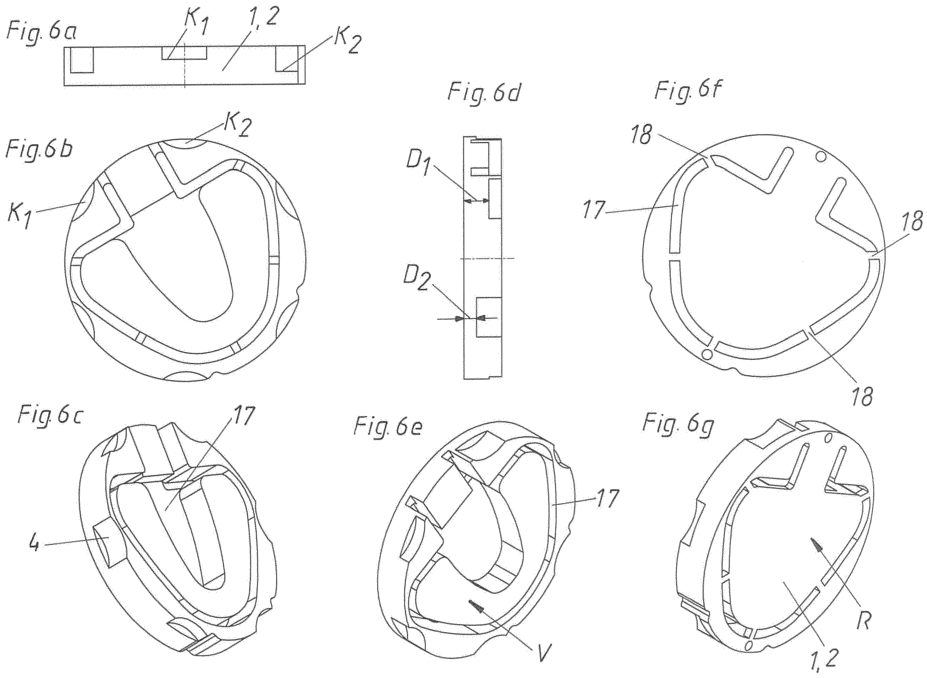

Um die Bearbeitung der Rohlinge 1 und 2 für einen Zahntechniker zu vereinfachen, können die Rohlinge 1, 2 gemäß den Fig. 6a bis 6g vorbearbeitet bzw. vorgefräst sein. Im Speziellen werden dafür die Rohlinge 1, 2 (Blöcke) so ausgeformt, dass die übrigbleibende Geometrie einem Gebiss nachempfunden ist. Dies hat den Vorteil, dass nicht mehr der komplette Block zerspant werden muss. Die Ausfräsungen 17 müssen somit nicht mehr von einem Gerät beim Zahntechniker eingearbeitet werden, sondern werden bereits mit Ausfräsungen 17 ausgeliefert. Der gebissförmige innere Bereich dieses Rohlings 1, 2 ist durch Verbindungsstege 18 mit dem äußeren Bereich verbunden.

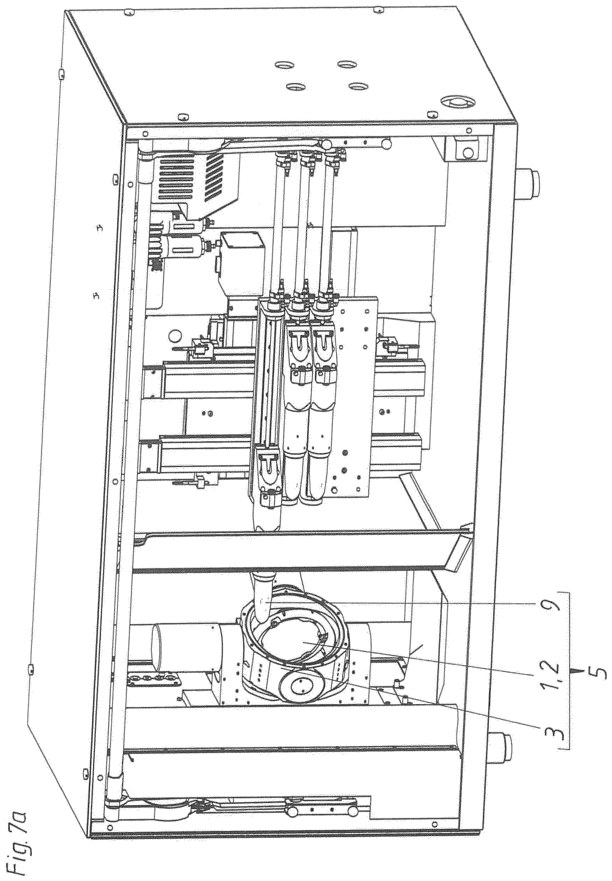

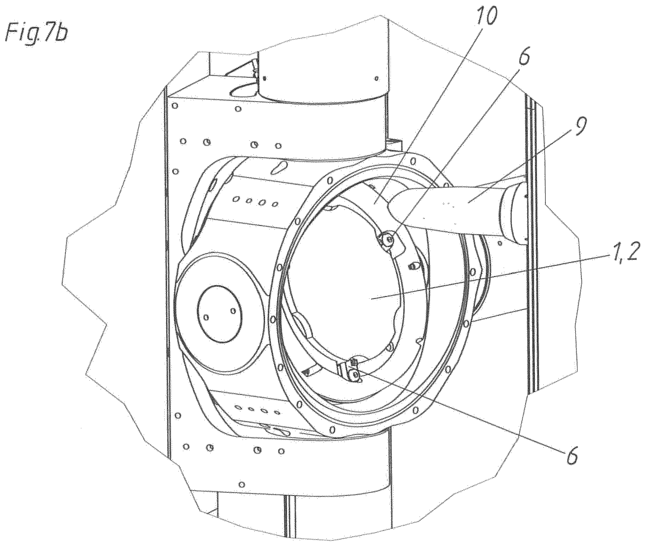

Fig. 7a zeigt eine Anordnung 5 mit einer Haltevorrichtung 3, zwei in der Haltevorrichtung 3 eingespannten Rohlingen 1 und 2 sowie einer Bearbeitungsvorrichtung 9. Diese Bearbeitungsvorrichtung 9 kann, wie in Fig. 7b dargestellt, eine Spindel aufweisen. An der Vorderseite der Spindel kann ein Fräswerkzeug oder ähnliches angeordnet sein, um die einzelnen Rohlinge 1 und 2 nacheinander jeweils von der Vorderseite V zu bearbeiten. Dafür kann sich der innere Haltering 10 zumindest um 180°, vorzugsweise komplette 360°, um eine Achse drehen. Aus dieser Fig. 7b ist auch gut ersichtlich, dass in eingespanntem Zustand die komplette Vorderseite V der Rohlinge 1 und 2 im Wesentlichen vollständig zugänglich ist. Dadurch wird unnötiges Umspannen verhindert und ein vollständiges Herausarbeiten der Dentalelemente E aus zwei Rohlingen 1 und 2 ist durchführbar, ohne dass dazwischen Arbeiten von einem Zahntechniker notwendig wären.

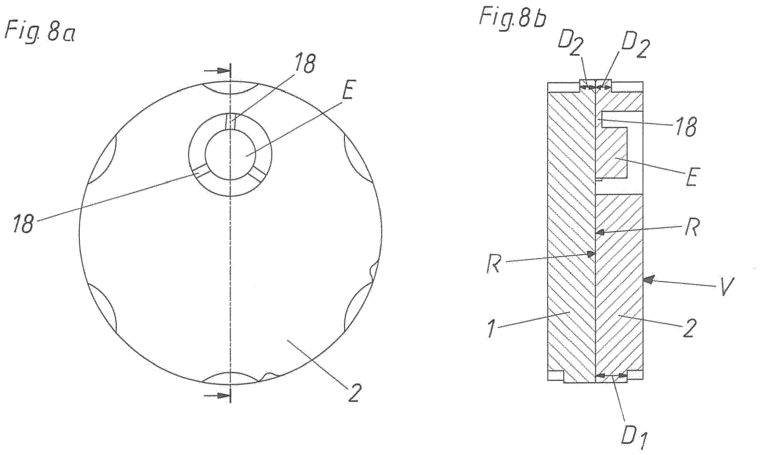

Die Fig. 8a und 8b zeigen zwei Rohlinge 1 und 2, wobei aus dem zweiten Rohling 2 bereits ein nur schematisch angedeutetes Dentalelement E herausgearbeitet ist. Dieses Dentalelement E ist über die Stege 18 noch mit dem restlichen Bereich des Rohlings 2 verbunden. In späterer Folge wird dann durch einen Zahntechniker oder durch spezielle Geräte dieses Dentalelement E aus dem zweiten Rohling 2 herausgelöst. Dentalelemente E können bspw. Kronen, Brücken, oder ähnliches sein. Bevorzugt werden aus diesen Rohlinge Dentalmodelle hergestellt, um anschließend Gebissbewegungssimulationen durchzuführen. Auch Trägermodelle für Zahnersatz können hergestellt werden. Die Rohlinge 1 und 2 können bspw. aus Zirkon, aus Metall, aus Gips oder aus Kunststoff bestehen. Aus Fig. 8b ist nochmals ersichtlich, dass die Sonder-Haltedicken D₂ im Bereich der Hilfshalteflächen K₂ zusammen die Standard-Haltedicke D₁ ergeben.

Die bisher gezeigten und beschriebenen Ausführungsbeispiele sind allesamt geeignet, um bei einer konkreten Ausführungsvariante des Anmelders eingesetzt zu werden. Natürlich kann aber die vorliegende Erfindung bei jeder Haltevorrichtung sinngemäß eingesetzt werden, was durch die folgenden Ausführungsbeispiele näher erläutert wird.

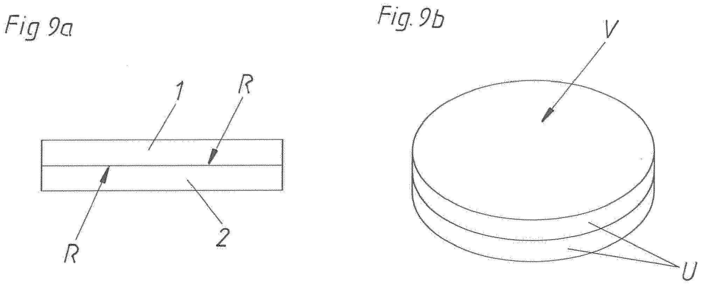

Die Fig. 9a und 9b zeigen zwei Rohlinge 1 und 2, welche über ihre jeweilige Rückseite R aneinander anliegen. Solche einfachen, zylinderförmigen Rohlinge 1 und 2 können in einer erfindungsgemäßen Anordnung festgespannt und über beide im Wesentlichen vollständig zugängliche Vorderseiten V bearbeitet werden.

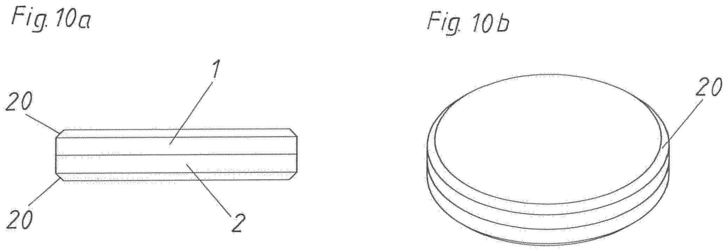

Dasselbe gilt für die Rohlinge 1 und 2 gemäß den Fig. 10a und 10b, wobei diese Rohlinge 1 und 2 jeweils eine abgeschrägte Fläche 20 aufweisen.

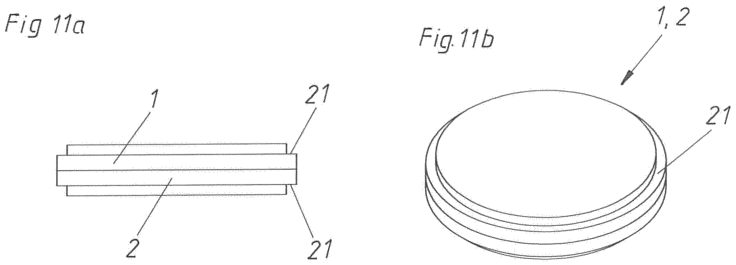

Die Fig. 11a und 11b zeigen Rohlinge 1 und 2 mit jeweils einer durchgehenden, peripheren Abstufung 21.

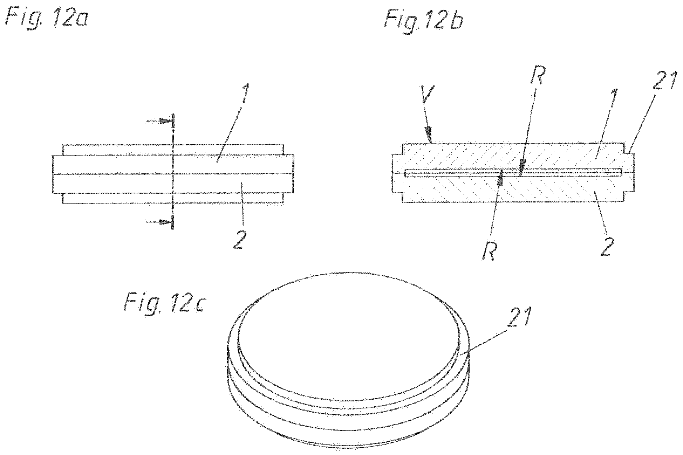

Eine derartige Abstufung 21 ist auch bei den Rohlingen gemäß der Fig. 12a bis 12c vorhanden. Ein Unterschied liegt aber darin, dass die Rohlinge 1 und 2 nicht vollflächig über ihre Rückseiten R aneinander liegen, sondern sich nur in einem peripheren Bereich (Randbereich) direkt kontaktieren.

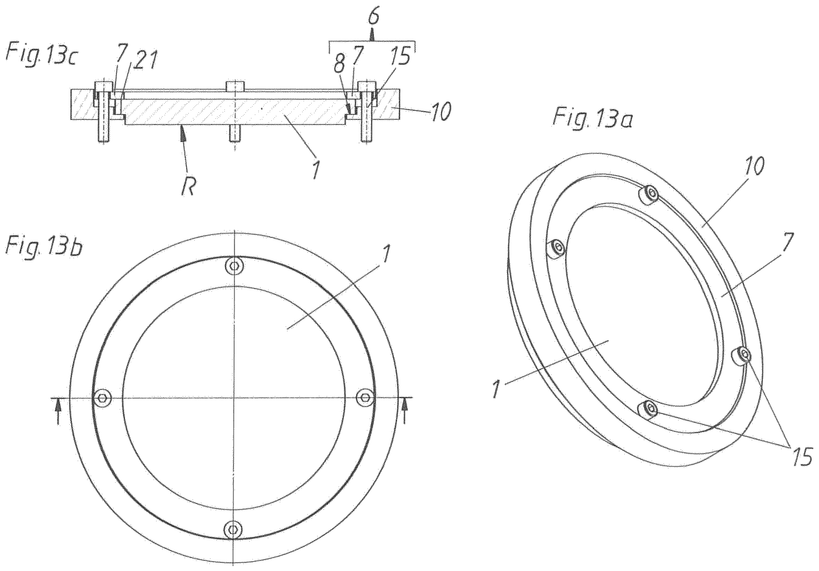

In den Fig. 13a bis 16c ist ein alternatives Ausführungsbeispiel einer Spannvorrichtung 6 gezeigt. So haben alle diese Darstellungen gemein, dass die Spannvorrichtung 6 ein ringförmiges, einstückiges Spannteil 7, mehrere Spannbolzen 15 in Form von Schrauben und die am (inneren) Haltering 10 ausgebildeten Spannflächen 8 aufweist.

Um einen einzelnen Rohling 1 festzuspannen, wird gemäß Fig. 13c zunächst der Rohling 1 über die Abstufung 21 auf die Spannfläche 8 aufgelegt. Danach wird das ringförmige Spannteil 7 an die gegenüberliegende Seite des Rohlings 1 angelegt. Danach werden die Spannbolzen 15 in entsprechende Ausnehmungen im Spannteil 7 eingeführt. An den Spannbolzen 15 ist jeweils ein Außengewinde ausgebildet, welches in ein im Haltering 10 ausgebildetes Innengewinde korrespondierend eingreift. Durch Hineindrehen dieser Spannbolzen 15 drückt das Spannteil 7 gegen den Rohling 1, wodurch der Rohling zwischen Spannteil 7 und Spannfläche 8 eingeklemmt und somit festgespannt bzw. festgehalten wird.

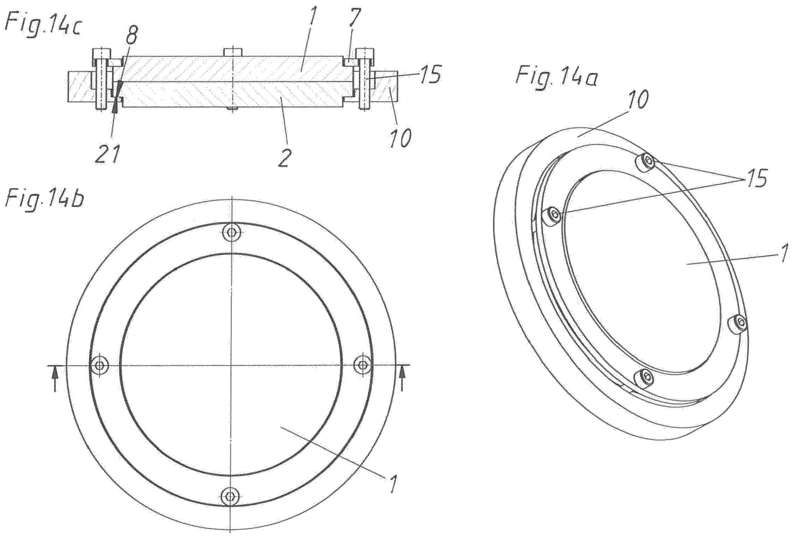

Auf sinngemäß gleiche Art und Weise werden gemäß den Fig. 14a bis 14c zwei Rohlinge 1 und 2 an einer Haltevorrichtung 3 festgespannt. Da bei dieser Spannvorrichtung 6 - im Gegensatz zur Spannvorrichtung 6 gemäß dem ersten Ausführungsbeispiel - der Abstand zwischen Spannteil 7 und Spannfläche 8 in der Spannstellung K veränderlich ist, wird ebenfalls eine Anordnung 5 geschaffen, bei welcher im Wesentlichen die kompletten Vorderseiten V beider Rohlinge 1 und 2 für eine Bearbeitungsvorrichtung 9 zugänglich sind. Dies ist vor allem auch deshalb möglich, da die Rohlinge 1 und 2 nur über ihre peripheren Bereiche an der Haltevorrichtung 3 festgespannt bzw. festspannbar sind (dies gilt auch für das erste Ausführungsbeispiel).

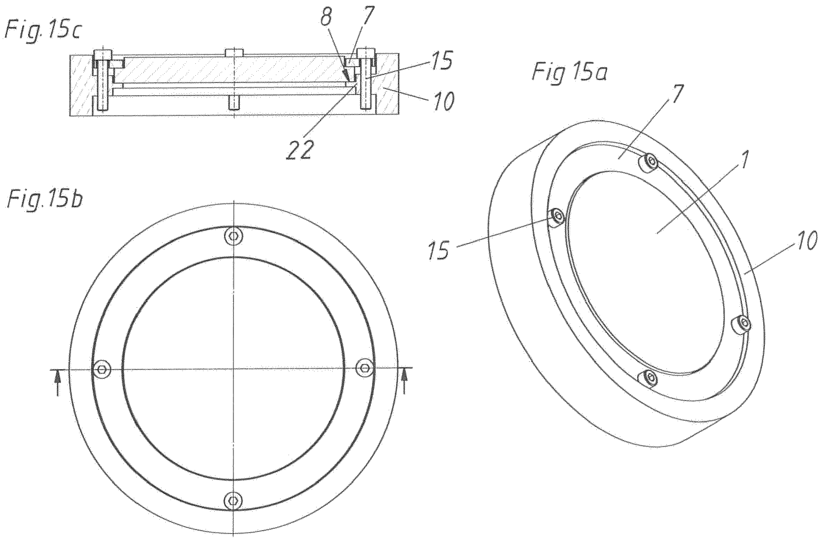

Auf Fig. 15c geht hervor, dass der Haltering 10 zusätzlich ein Zwischenstück 22 aufweist, welcher die Spannfläche 8 mitbildet.

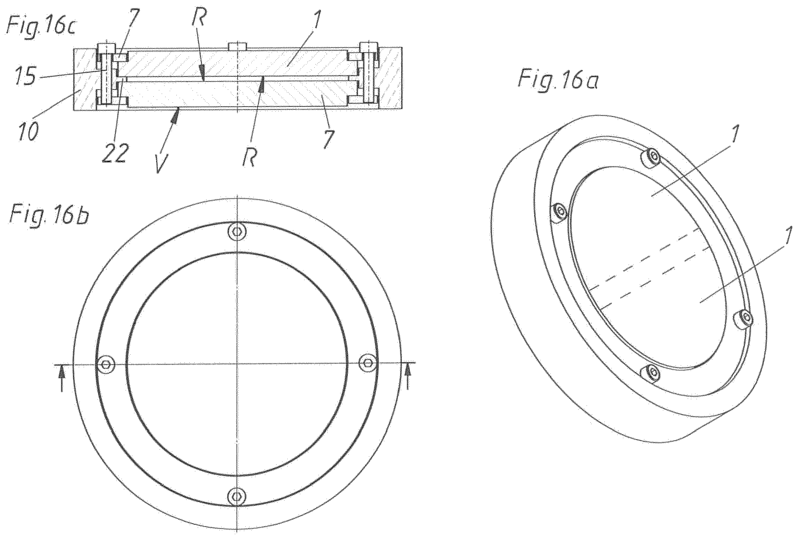

In den Fig. 16a bis 16c sind zwei Rohlinge 1 und 2 in eine solche Haltevorrichtung 3 eingespannt. Dazu ist ein zweites, unteres ringförmiges Spannteil 7 vorgesehen. In diesem Fall kann in diesem unteren Spannteil 7 ein zum Spannbolzen 15 passendes Innengewinde ausgebildet sein. Es ist aber auch möglich, dass das untere Spannteil 7 über zwei "von unten kommende" und von dort mit dem Haltering 10 verschraubbare Spannbolzen 15 mit dem Haltering 10 verbindbar ist. In Fig. 16a ist durch die strichlierten Linien angedeutet, dass mehr als zwei Rohlinge 1 und 2 in einer Haltevorrichtung 3 gehalten werden können. So können beispielsweise zwei separate, beabstandete und kleinere (in diesem Fall in etwa halbkreisförmige) Rohlinge 1 in "einer Ebene" eingespannt sein. Dadurch ist es auch möglich, dass der zweite Rohling 2 zumindest teilweise über seine Rückseite R von der Bearbeitungsvorrichtung 9 bearbeitbar ist. Dies ist auch möglich, wenn vorher durch Bearbeitung des ersten Rohlings 1 bereits ein ausreichender Bereich freigestellt wurde, der einen Zugang zur Rückseite R des zweiten Rohlings 2 ermöglicht.

### Bezugszeichenliste:

- 1: erster Rohling
- 2: zweiter Rohling
- 3: Haltervorrichtung
- 4: Ausnehmungen
- 5: Anordnung
- 6: Spannvorrichtung
- 7: Spannteil
- 8: Spannfläche
- 9: Bearbeitungsvorrichtung
- 10: innerer Haltering
- 11: äußerer Haltering
- 12: Träger
- 13: Antriebsmotor
- 14: Antriebsmotor
- 15: Spannbolzen
- 16: Positioniernut
- 17: Vorfräsung
- 18: Verbindungsstege
- 19: Positionsbohrung
- 20: abgeschrägte Fläche
- 21: Abstufung
- 22: Zwischenstück
- K₁: Haupthalteflächen
- K₂: Hilfshalteflächen
- D₁: Standard-Haltedicke
- D₂: Sonder-Haltedicke
- V: Vorderseite
- R: Rückseite
- U: Umfangsfläche
- P: passive Stellung
- K: Spannstellung
- E: Dentalelement
- G: Gegenhaltefläche

## Patentansprüche

1. Anordnung (5) mit wenigstens zwei Rohlingen (1, 2) und einer Haltevorrichtung (3) zum Festspannen der beiden Rohlinge (1, 2), wobei die beiden Rohlinge (1, 2) jeweils eine als Vorderseite (V) ausgebildete erste Seite und jeweils eine als Rückseite (R) ausgebildete zweite Seite aufweisen, wobei in eingespanntem Zustand die beiden Rohlinge (1, 2) mit den Rückseiten (R) einander zugewandt sind und im Wesentlichen die kompletten Vorderseiten (V) der Rohlinge (1, 2) zugänglich sind, **dadurch gekennzeichnet, dass** die Rohlinge (1, 2) scheibenförmig ausgebildet sind und über periphere Bereiche an der Haltevorrichtung (3) festspannbar sind.

2. Anordnung nach Anspruch 1, **gekennzeichnet durch** eine Bearbeitungsvorrichtung (9) zum Bearbeiten der beiden in der Haltevorrichtung (3) eingespannten Rohlinge (1, 2), wobei von der Bearbeitungsvorrichtung (9) über die im Wesentlichen komplett zugänglichen Vorderseiten (V) beide Rohlinge (1, 2) bearbeitbar sind.

## Claims

1. An arrangement (5) comprising at least two blanks (1, 2) and a holding device (3) for holding both blanks (1, 2), wherein both blanks (1, 2) each have a first side formed as a front side (V) and a second side formed as a back side (R), wherein in a chucked state both blanks (1, 2) are facing to each other with their back sides (R) and substantially the complete front sides (V) of the blanks (1, 2) are accessible, **characterized in that** the blanks (1, 2) are disk-shaped and can be chucked to the holding device (3) by peripheral areas.

2. The arrangement according to claim 1, **characterized by** a processing device (9) for machining both blanks (1, 2) chucked in the holding device (3), wherein both blanks (1, 2) can be machined via their substantially completely accessible front sides (V) by the processing device (9).

## Revendications

1. Ensemble (5), avec au moins deux ébauches (1, 2) et un dispositif de retenue (3) destiné à serrer les deux ébauches (1, 2), les deux ébauches (1, 2) comportant respectivement un premier côté constitué en tant que côté avant (V) et respectivement un deuxième côté constitué en tant que côté arrière (R), les deux ébauches (1, 2) avec les côtés arrière (R) étant, dans l'état serré, tournées l'une vers l'autre, et les côtés avant (V) complets des ébauches (1, 2) étant essentiellement accessibles, **caractérisé en ce que** les ébauches (1, 2) sont constituées en forme de disque et peuvent être serrées sur le dispositif de retenue (3) par le biais de zones périphériques.

2. Ensemble selon la revendication 1, **caractérisé par** un dispositif d'usinage (9) destiné à l'usinage des deux ébauches (1, 2) serrées dans le dispositif de retenue (3), les deux ébauches (1, 2) pouvant être usinées par le dispositif d'usinage (9) par le biais des côtés avant (V) essentiellement complètement accessibles.
